# EUROPEAN PATENT APPLICATION

(11) **EP 1 154 186 A1**
(43) Date of publication of application: **14.11.2001**
(21) Application number: 01201681.2
(22) Date of filing: 08.05.2001
(51) Int. Cl.: F16L 19/06

(54) **Pipe coupling and captive seal therefor**

(30) Priority: 11.05.2000 IL 13607800
(71) Applicant: PLASSON Ltd, 37805 Doar Na Menashe (IL)
(72) Inventor: Egozi, Yigaal Moshe, Natania 42 460 (IL)
(74) Representative: Weydert, Robert

(57) **Abstract**

The pipe coupling for pressurized pipes includes a body member (22) formed with a bore (23) for receiving a pipe (P), an annular recess (24) defined by inner and outer shoulders (24a, 24b) and a captive seal (30) within the annular recess (24) for engagement with the outer surface of the pipe (P) when inserted therein to produce an initial seal before the pipe (P) is pressurized, and an operating seal after the pipe (P) has been pressurized. The captive seal (30) includes: a leading section (31); a primary, narrow sealing surface (32) integrally joined to the leading section (31) and projecting radially inwardly into the bore (23) for engaging the outer surface of the pipe (P) when inserted into the bore (23); and a trailing abutting section (33) in the form of an annular axial projection having an outer diameter substantially equal to the diameter of the recess (24), a narrow radial dimension for its complete axial dimension, and an axial dimension which is longer than its radial dimension. Such a construction increases the radial deformation, and thereby the effective area of the primary sealing surface (32) and of the stress acting on the pipe (P), during the insertion of the pipe (P) into the bore(23).

## Description

### FIELD AND BACKGROUND OF THE INVENTION

The present invention relates to pipe couplings and also to captive seals for such pipe couplings.

One form of captive seal widely used in pipe couplings is in the form of an O-ring received within an annular recess formed in the coupling body member, or defined by a shoulder in the body member and a threaded sleeve, for engaging the outer surface of the pipe when inserted into the body member. The O-ring seal is widely used since it provides a good initial seal at the time of inserting the pipe, and also a good operating seal after the pipe has been inserted and pressurized. However, a main disadvantage of the O-ring seal is that it imposes a large resistance to the insertion of the pipe, and therefore frequently requires the leading edge of the pipe to be chamfered, and/or the outer surface of the pipe to be lubricated, before the pipe can be inserted.

Another type of seal in pipe couplings is of a V-ring construction. In one type, one of the V-sides projects radially inwardly of the recess to engage the pipe when inserted, but the V-apex permits that side to flex easily, thereby permitting the pipe to be easily inserted; however, it produces a relatively poor initial seal. Further disadvantages are that such a seal is very sensitive to scratches on the outer surface of the pipe.

In a second type, the V-apex projects radially inwardly of the recess, the inner diameter of the seal being made sufficiently large so as to permit the pipe to be inserted with relative ease; and after the pipe has been inserted, a compression bushing is moved axially to deform the seal into firm contact with the outer surface of the pipe. While the latter seal requires a relatively low insertion force, and provides a relatively good initial seal and operating seal, it is very sensitive to the nut tightening torque.

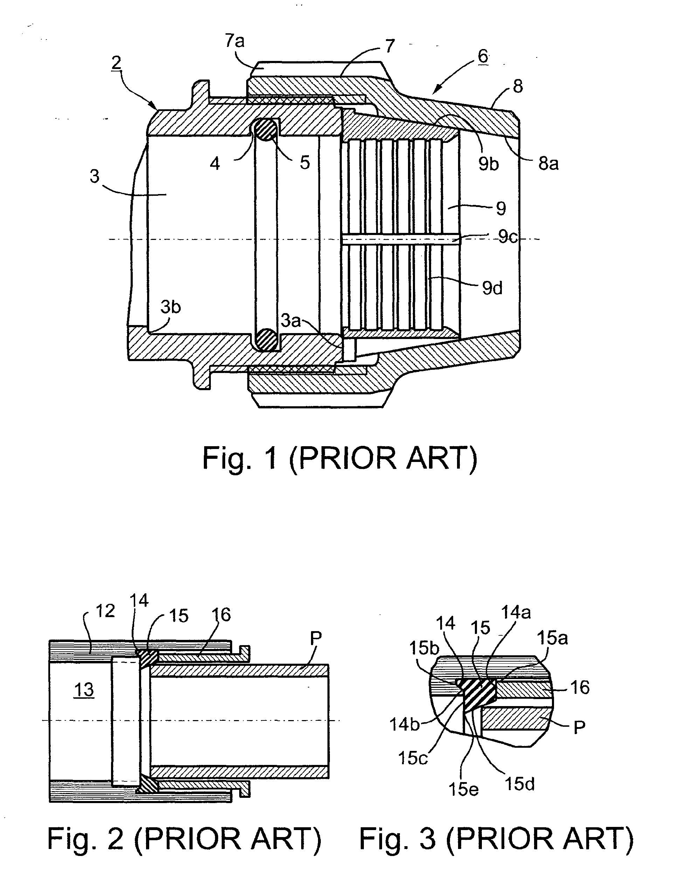

Figs. 2 and 3, to be described more particularly below, illustrate another known seal for pipe couplings. As will be described more particularly below, such a seal is of a special configuration in cross-section requiring a relatively low insertion force but producing a relatively good initial seal during the insertion of the pipe, and also a good operating seal after the pipe has been inserted and pressurized.

### OBJECTS AND BRIEF SUMMARY OF THE INVENTION

An object of the present invention is to provide a pipe coupling of the last-mentioned type but producing a number of advantages over the known construction as will be described more par below. Another object of the invention is to provide an annular seal particularly useful in pipe couplings of the foregoing type.

According to one aspect of the present invention, there is provided a pipe coupling for pressurized pipes comprising: a body member formed with a bore for receiving a pipe to be coupled thereto; the bore having an outer end initially receiving the end of the pipe, and an inner end fixing the final location of the end of the pipe when coupled thereto; the body member being further formed with an annular recess between the outer and inner ends of the bore, which recess is defined by a recessed surface between inner and outer shoulders; and an annular seal of elastomeric material within the annular recess for engagement with the outer surface of the pipe when inserted therein to produce an initial seal before the pipe is pressurized, and an operating seal after the pipe has been pressurized; the annular seal comprising: a leading section facing the outer shoulder of the recess for initially receiving and guiding the end of the pipe when inserted into the bore; a primary, narrow sealing surface integrally joined to the leading section on the side thereof facing the inner shoulder of the recess and projecting radially inwardly into the bore for engaging the outer surface of the pipe when inserted into the bore; and a trailing abutting section engageable with the inner shoulder of the recess to cause at least a portion of the leading section to deform radially outwardly, during the insertion of the pipe, to thereby increase the effective area of the primary sealing surface, and also the stress thereof, acting on the pipe as the pipe is inserted into the bore; characterized in that the trailing abutting section is in the form of an annular axial projection having an outer diameter substantially equal to the diameter of the recess surface, a narrow radial dimension for its complete axial dimension, and an axial dimension which is longer than its radial dimension, such as to increase the radial deformation, and thereby the effective area of the primary sealing surface, and of the stress acting on the pipe, during the insertion of the pipe into the bore.

According to another aspect of the invention, the seal includes a thickened stiffening section effective to stiffen the primary sealing surface and leading section during their deformation radially inwardly as the pipe is inserted into the bore.

According to a further aspect of the invention, the leading section of the seal has a tapered outer surface such as to facilitate removal of the pipe from the bore of the body member.

According to a still further aspect of the present invention, there is provided an annular seal for reception in an annular recess surface defined by outer and inner shoulders formed in a body member circumscribing a bore for receiving a pipe to be sealed, the annular seal comprising: a leading section facing the outer shoulder of the recess for initially receiving and guiding the end of the pipe when inserted into the bore; a primary sealing surface integrally joined to the leading section on the side thereof facing the inner shoulder of the recess and projecting radially inwardly into the bore for engaging the outer surface of the pipe when inserted into the bore; and a trailing abutting section engageable with the inner shoulder of the recess to cause at least a portion of the leading section to deform radially outwardly, during the insertion of the pipe, to thereby increase the effective area of the primary sealing surface, and also the stress thereof, acting on the pipe as the pipe is inserted into the bore; characterized in that the trailing abutting section is in the form of an annular axial projection having an outer diameter substantially equal to the diameter of the recess surface, a narrow radial dimension for its complete axial dimension, and an axial dimension which is longer than its radial dimension, such as to increase the radial deformation, and thereby the effective area of the primary sealing surface, and of the stress acting on the pipe, during the insertion of the pipe into the bore.

As will be described more particularly below, making the trailing abutting section of the seal in the form of an annular axial projection as defined above increases the deformation of the sealing surface, as well as the stressed condition of the sealing surface. In addition, providing the sealing ring with the stiffening section as described above better concentrates the sealing forces applied by the seal to the outer surface of the pipe both during the initial insertion of the pipe, as well as after the pipe has been inserted and pressurized.

Further features and advantages of the invention will be apparent from the description below.

### BRIEF DESCRIPTION OF THE DRAWINGS

The invention is herein described, by way of example only, with reference to the accompanying drawings, wherein:
Fig. 1 is a sectional view illustrating one form of pipe coupling constructed in accordance with the prior art;
Fig. 2 is a sectional view and Fig. 3 is an enlarged fragmentary view, illustrating another pipe coupling constructed in accordance with the prior art;
Fig. 4 illustrates one form of pipe coupling constructed in accordance with the present invention;
Fig. 5 is an enlarged fragmentary view of the pipe coupling of Fig. 4 showing the seal in its initial condition;
Fig. 6 is a three-dimensional view illustrating the seal alone in the pipe coupling of Figs. 4 and 5;
Fig. 7 is a sectional view illustrating the seal of Fig. 6;
Fig. 8 is an enlarged sectional view illustrating the seal of Fig. 6;
Fig. 9 is a view of the pipe coupling of Fig. 4 but showing the seal in its operating condition after the pipe has been inserted;
Fig. 10 is an enlarged fragmentary view better illustrating the seal of Fig. 9 in its operating condition;
Fig. 11 is a view similar to that of Fig. 4 but illustrating a modification in the construction of the pipe coupling; and
Fig. 12 is a view illustrating the seal of Fig. 11 in its operating condition.

### DETAILED DESCRIPTION OF THE PRIOR ART (FIGS. 1-3)

The pipe coupling illustrated in Fig. 1 is of a well-known prior art construction. It includes a body member 2 formed with a bore 3 for receiving a pipe (not shown) to be coupled. The bore has an outer end 3a initially receiving the end of the pipe, and an inner end defined by an inner shoulder 3b fixing the final location of the end of the pipe when inserted. Body member 2 is further formed with an annular recess 4 between ends 3a, 3b for receiving an O-rings of elastomeric material projecting inwardly from the recess so as to engage the outer surface of the pipe when inserted into the bore 3.

The particular prior art coupling illustrated in Fig. 1 further includes a nut member, generally designated 6, having a nut section 7 at one end threadedly received on the end of the body member 2, and a conical section 8 at the opposite end cooperable with a split-ring 9 for firmly clamping the inserted pipe within the body member. As known in pipe couplings of this type, the pipe is inserted into bore 3 of the body member while the nut member 6, containing within it the split-ring 9, is loosened with respect to the body member; and then the nut member 6 is manually rotated, facilitated by its external ribs 7a, to tighten the nut with respect to the body member while the inner conical surface 8a of the conical section 8, engaging the outer conical surface 9b of the split-ring 9, contracts the split-ring 9, as permitted by its split 9c, to cause its inner teeth 9d to firmly bite into the inserted pipe.

As described earlier, the O-ring seal 5 provides a relatively good initial seal upon inserting the pipe into the body member 2, and also a relatively good operative seal after the pipe has been inserted and the pipe pressurized, but suffers from the disadvantage of requiring a relatively large force to insert the pipe into the body member.

The prior art pipe coupling illustrated in Figs. 2 and 3 also includes a body member 12 formed with a bore 13 for receiving the pipe P to be coupled, and a recess 14 for receiving an annular seal 15 of elastomeric material to engage the outer surface of the pipe when inserted into the housing. In this case, however, the annular seal 15 is not an O-ring, but rather is of a special cross-sectional configuration as shown in Fig. 3. In addition, the annular recess 14 circumscribing the bore 13 receiving the pipe P is defined by an outer shoulder 14a constituting the end of a bushing 16 threadedly received within bore 13 of body member 12, and an inner shoulder 14b of body member 12. As seen particularly in Fig. 3, the outer shoulder 14a is flat and substantially perpendicular to the longitudinal axis of bore 13; whereas the inner shoulder 14b is tapered, increasing in its axial dimension towards the bore longitudinal axis.

The opposite faces of sealing ring 15 are similarly configured as shoulders 14a, 14b. Thus, The outer face 15a of the sealing ring is flat and substantially perpendicular to the bore longitudinal axis; whereas the inner face of the sealing ring includes a tapered section 15b corresponding to, and for the length of, the tapered face of the inner shoulder 14b, while the remaining surface 15c of the inner face of the sealing ring 15 is flat and substantially perpendicular to the bore longitudinal axis.

As further shown in Fig. 3, the inner surface 15d of the sealing ring 15 projecting within the bore is tapered to its juncture with the inner surface 15c, to thereby define a relatively sharp annular edge 15e serving as the primary sealing surface with respect to the pipe P.

The pipe coupling illustrated in Figs. 2 and 3 is used in the following manner:
First, with the bushing 16 loosened, the annular sealing ring 15, oriented as shown in Fig. 3, is inserted into the bore between the outer and inner shoulders 14a, 14b. When the sealing ring 15 is so assembled, as shown in Fig. 3, its inner section defined by surfaces 15c, 15d and 15e, projects into the bore 14 so as to be engageable with the outer surface of the pipe P when inserted into the bore as shown in Fig. 3.
During the insertion of the pipe, its leading edge engages tapered surface 15d of the sealing ring 15, to deform the projecting inner part of the sealing ring radially outwardly about the juncture 15f between sections 15b and 15c, to increase the effective sealing surface of the ring acting on the outer surface of pipe P. This deformation of the sealing ring also increases the stressed condition of the sealing ring. After the pipe has been inserted, the bushing 16 is tightened to deform the seal radially inwardly firmly against the pipe P, thereby producing a good hydraulic seal when the pipe is pressurized.
It will thus be seen that the seal 15 in the prior art pipe coupling illustrated in Figs. 2 and 3 enables the pipe P to be inserted with a relatively low insertion force, and yet provides a relatively good initial seal during the insertion of the pipe, as well as a relatively good operating seal after the pipe has been inserted and pressurized.

### DESCRIPTION OF PREFERRED EMBODIMENTS OF THE INVENTION

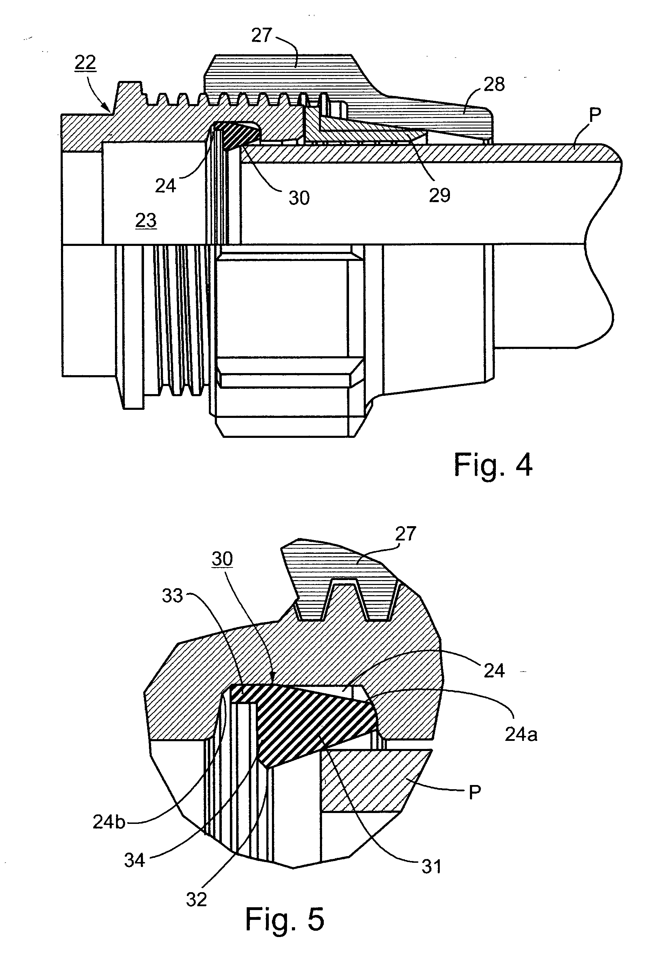

Figs. 4-12 of the drawings illustrate two preferred embodiments of pipe couplings, and particularly of captive seals therefor, constructed in accordance with the present invention. These embodiments are somewhat similar to the prior art construction illustrated in Figs. 2 and 3, but provide a number of improvements having important advantages, as will be described more particularly below.

The pipe coupling illustrated in Figs. 4-10 is generally of the prior art construction illustrated in Fig. 1, but includes an improved captive seal of the prior art type illustrated in Figs. 2 and 3. Thus, the illustrated pipe coupling includes a body member 22 formed with a bore 23 and an internal annular recess 24 for receiving the sealing ring 30. It also includes a nut member 26 formed with a nut section 27 at one end threadedly received on the body member 22, and with a conical section 28 at the opposite end engageable with the outer surface of a split ring 29 for firmly clamping the pipe P, as in the prior art construction of such pipe couplings briefly described above with respect to Fig. 1.

As shown particularly in Fig. 5, the annular sealing ring 30 includes a leading section 31 facing the outer shoulder 24a defining the recess 24, for initially receiving and guiding the end of the pipe P when inserted into the bore 23. Sealing ring 30 further includes a primary sealing surface 32 integrally joined to the leading section 31 and initially very narrow, generally corresponding to primary sealing surface 15e in the annular seal 15 of the Figs. 2, 3 prior art pipe coupling. However, the annular seal 30 in Fig. 5 includes a trailing section 33 facing the inner shoulder 24b of recess 24, and a thickened stiffening section 34 integrally joining the trailing section 33 with the leading section 30 and its primary sealing surface 32. Both sections 33 and 34 are of substantially different construction from the seal 15 of Figs. 2 and 3, and provide important advantages as described below.

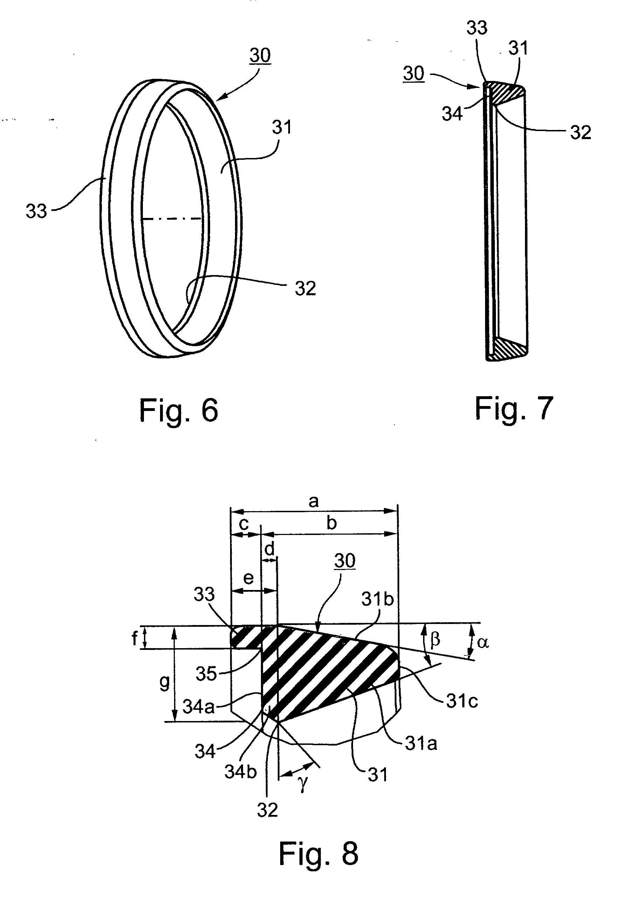

Thus, as shown particularly in Fig. 6, the trailing section 33 of seal 30 has an outer diameter substantially equal to the diameter of the recessed surface 24, a narrow radial dimension (width) for its complete axial dimension (length), and an axial dimension (length) which is longer than its radial dimension (width). Such a construction substantially increases the radial deformation, and thereby the effective sealing surface and stress acting on the pipe, during the insertion of the pipe into the bore. In addition, the thickened section 34 between the annular axial projection 23 and the primary sealing surface 32 acts to stiffen the leading section 31 during its deformation radially outwardly to further increase the effective stress acting on the sealing surface as the pipe is inserted into the bore.

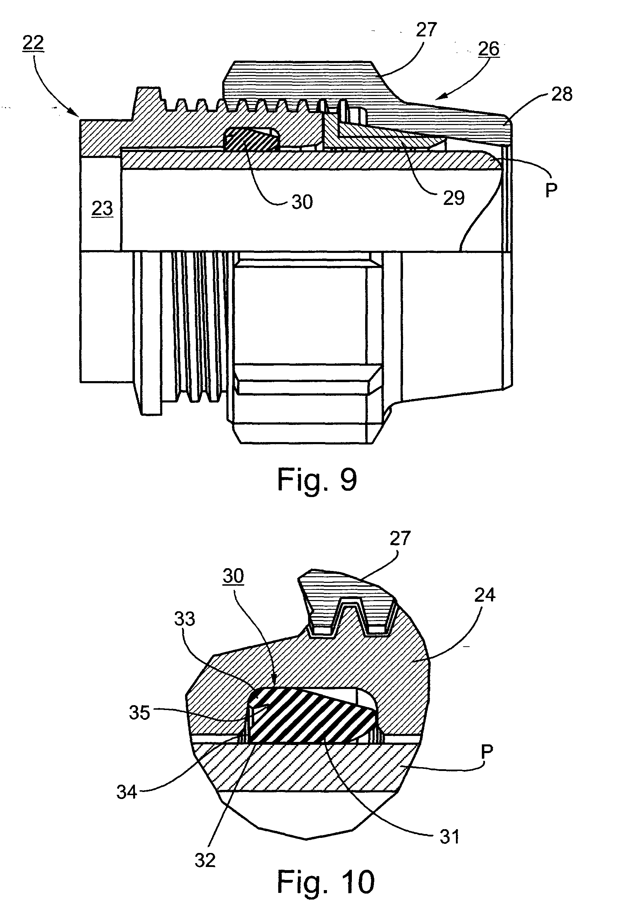

The foregoing are particularly illustrated in Figs. 9 and 10 showing the condition of the pipe coupling after the pipe P has been inserted into the bore to cause its leading edge to engage the inner shoulder 23b of the body member 22. It will thus be seen that the insertion of the pipe deforms the leading section 31 radially outwardly about the juncture 35 with the axial projection 33 at the trailing edge of the sealing ring to cause the effective sealing surface to be increased by a major part of the leading section 31 of the sealing ring. As also seen in Fig. 10, the thickened section 34 increases the stress applied by the sealing ring against the outer surface of the pipe P so as to produce an enhanced operating seal after the pipe has been inserted and the pipe pressurized.

As shown particularly in Figs. 5 and 8, the inner surface 31a of the seal leading section 31 is tapered to facilitate the insertion of the pipe P; the outer surface 31b is similarly tapered; and the juncture between the two surfaces at the leading edge of the seal is rounded as shown at 31c. In addition, the annular axial projection 33 at the trailing edge of the ring has a radial dimension (width) which is substantially uniform for its complete axial dimension (length).

It will also be seen that the surface 34a of the thickened section 34 facing the trailing section 33 is flat and substantially perpendicular to the bore axis. The outer end of the flat surface 34a is joined to the trailing section 33 by the rounded juncture 35, and the inner end of surface 34a is joined to the primary sealing surface 32 by a tapered juncture 34b. It will also be seen that the radial dimension (width) of trailing section 33 is substantially less than one-half the radial dimension of the thickened stiffening section 34.

Following is one preferred example of various dimensions shown in Fig. 8 that may be provided: a=11.0 mm; b=9.0 mm; c=2.0 mm; d=1.0 mm; e=3.0 mm; f=1.5 mm; g=6.4 mm; angle α=10.0 °; angle β=20.0 °; and angle γ=45.0°.

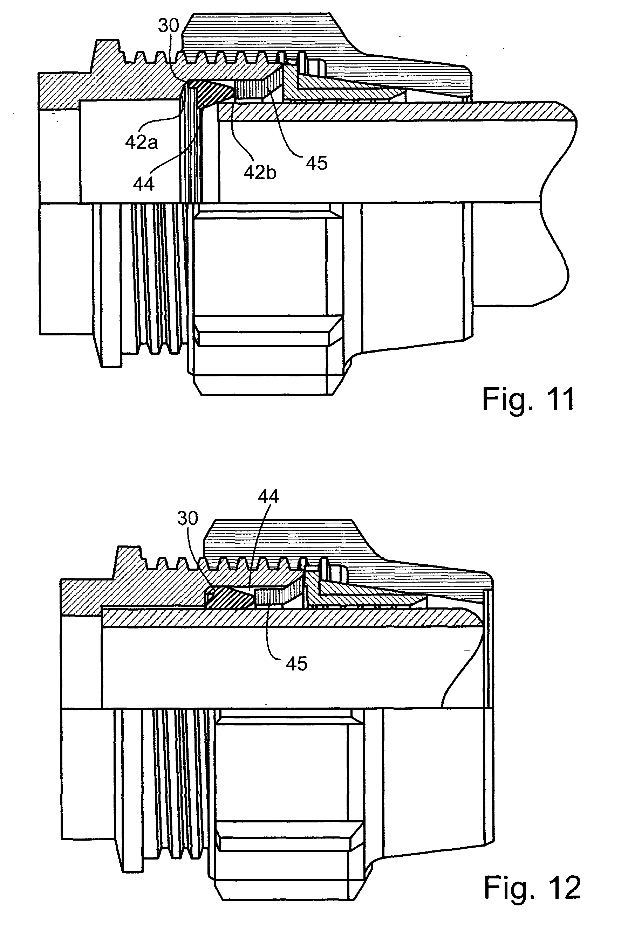

In the pipe coupling illustrated in Figs. 4-10, the sealing ring 30 is received within an annular recess 24 which is formed in the inner surface of the body member 22, either during the initial molding of the body member, or by cutting out the recess after the body member has been molded. Figs. 11 and 12 illustrate a variation, wherein this annular recess, therein designated 44, is defined by an inner shoulder 42a formed in the body member 42, and by an outer shoulder 42b formed in the end of a bushing 45 received within the body member. However, in such a construction, the bushing is used only to define the inner shoulder of the recess engageable with the leading edge of the sealing ring 30; accordingly, the novel sealing ring of the present invention does not actually require such a bushing. This is to be distinguished from the Figs. 2, 3 pipe coupling of the prior art, wherein such a bushing is needed for clamping the seal within its recess in order to permit its deformation after the insertion of the pipe. Accordingly, a further advantage of the novel construction of the present invention is that, in addition, to the substantially increased sealing surface and stress applied to the pipe during the insertion and after the pressurization of the pipe, the pipe coupling of the present invention does not actually require such a bushing.

While the invention has been described with respect to two preferred embodiments, it will be appreciated that these are set forth merely for purposes of example, and that many other variations, modifications and applications of the invention may be made.

## Claims

1. A pipe coupling for pressurized pipes, comprising:
a body member formed with a bore for receiving a pipe to be coupled thereto;
said bore having an outer end initially receiving the end of the pipe, and an inner end fixing the final location of the end of the pipe when coupled thereto;
said body member being further formed with an annular recess between the outer and inner ends of the bore, which recess is defined by a recessed surface between inner and outer shoulders;
and an annular seal of elastomeric material within said annular recess for engagement with the outer surface of the pipe when inserted therein to produce an initial seal before the pipe is pressurized, and an operating seal after the pipe has been pressurized; said annular seal comprising:
a leading section facing said outer shoulder of the recess for initially receiving and guiding the end of the pipe when inserted into the bore;
a primary, narrow sealing surface integrally joined to the leading section on the side thereof facing the inner shoulder of the recess and projecting radially inwardly into said bore for engaging the outer surface of the pipe when inserted into the bore;
and a trailing abutting section engageable with the inner shoulder of the recess to cause at least a portion of said leading section to deform radially outwardly, during the insertion of the pipe, to thereby increase the effective area of the primary sealing surface, and also the stress thereof, acting on the pipe as the pipe is inserted into the bore;
said trailing abutting section being in the form of an annular axial projection having an outer diameter substantially equal to the diameter of said recess surface, a narrow radial dimension for its complete axial dimension, and an axial dimension which is longer than its radial dimension, such as to increase said radial deformation, and thereby said effective area of the primary sealing surface, and of the stress acting on the pipe, during the insertion of the pipe into the bore.

2. The pipe coupling according to Claims 1, wherein said annular axial projection is joined to the initial sealing surface by a thickened stiffening section effective to stiffen the primary sealing surface and leading section during their deformation radially inwardly as the pipe is inserted into the bore.

3. A pipe coupling for pressurized pipes, comprising:
a body member formed with a bore for receiving a pipe to be coupled thereto;
said bore having an outer end initially receiving the end of the pipe, and an inner end fixing the final location of the end of the pipe when coupled thereto;
said body member being further formed with an annular recess between the outer and inner ends of the bore, which recess is defined by a recessed surface between inner and outer shoulders;
and an annular seal of elastomeric material within said annular recess for engagement with the outer surface of the pipe when inserted therein to produce an initial seal before the pipe is pressurized, and an operating seal after the pipe has been pressurized; said annular seal comprising:
a leading section facing said outer shoulder of the recess for initially receiving and guiding the end of the pipe when inserted into the bore;
a primary, narrow sealing surface integrally joined to the leading section on the side thereof facing the inner shoulder of the recess and projecting radially inwardly into said bore for engaging the outer surface of the pipe when inserted into the bore;
said annular axial projection being joined to the initial sealing surface by a thickened stiffening section effective to stiffen the primary sealing surface and leading section during their deformation radially inwardly as the pipe is inserted into the bore.

4. The pipe coupling according to Claim 3, wherein said annular seal further includes:
a trailing abutting section engageable with the inner shoulder of the recess to cause at least a portion of said leading section to deform radially outwardly, during the insertion of the pipe, to thereby increase the effective area of the primary sealing surface, and also the stress thereof, acting on the pipe as the pipe is inserted into the bore;
said trailing abutting section being in the form of an annular axial projection having an outer diameter substantially equal to the diameter of said recess surface, a narrow radial dimension for its complete axial dimension, and an axial dimension which is longer than its radial dimension, such as to increase said radial deformation, and thereby said effective area of the primary sealing surface, and of the stress acting on the pipe, during the insertion of the pipe into the bore.

5. The pipe coupling according to either of Claims 2 or 4, wherein the radial dimension of said annular axial projection is less than the radial dimension of said thickened stiffening section.

6. The pipe coupling according to Claim 5, wherein the surface of said thickened stiffening section facing said annular axial projection is substantially flat and perpendicular to the longitudinal axis of said bore.

7. The pipe coupling according to Claim 6, wherein said flat surface of the thickened stiffening section is joined to said primary sealing surface by a tapered surface.

8. The pipe coupling according to any one of Claims 5-7, wherein said thickened stiffening section has an axial dimension approximately one-half the axial dimension of said annular axial projection.

9. The pipe coupling according to any one of Claims 5-8, wherein said leading section has an axial dimension substantially larger than the axial dimension of said annular axial projection, thickened stiffening section and initial sealing surface.

10. The pipe coupling according to any one of Claims 5-9, wherein said annular axial projection has a radial dimension which is substantially uniform for its complete axial dimension.

11. The pipe coupling according to any one of Claims 1-10, wherein said leading section has a tapered outer surface facilitating removal of the pipe from the bore of the body member.

12. A pipe coupling for pressurized pipes, comprising:
a body member formed with a bore for receiving a pipe to be coupled thereto;
said bore having an outer end initially receiving the end of the pipe, and an inner end fixing the final location of the end of the pipe when coupled thereto;
said body member being further formed with an annular recess between the outer and inner ends of the bore, which recess is defined by a recessed surface between inner and outer shoulders;
and an annular seal of elastomeric material within said annular recess for engagement with the outer surface of the pipe when inserted therein to produce an initial seal before the pipe is pressurized, and an operating seal after the pipe has been pressurized; said annular seal comprising:
a leading section facing said outer shoulder of the recess for initially receiving and guiding the end of the pipe when inserted into the bore;
and a primary, narrow sealing surface integrally joined to the leading section on the side thereof facing the inner shoulder of the recess and projecting radially inwardly into said bore for engaging the outer surface of the pipe when inserted into the bore;
said leading section having a tapered outer surface such as to facilitate removal of the pipe from the bore of the body member.

13. The pipe coupling according to either of Claims 11 or 12, wherein said leading section also has a tapered inner surface to facilitate insertion of the pipe.

14. An annular seal for reception in an annular recess defined by outer and inner shoulders formed in a body member circumscribing a bore for receiving a pipe to be sealed, said annular seal comprising:
a leading section facing said outer shoulder of the recess for initially receiving and guiding the end of the pipe when inserted into the bore;
a primary sealing surface integrally joined to the leading section on the side thereof facing the inner shoulder of the recess and projecting radially inwardly into said bore for engaging the outer surface of the pipe when inserted into the bore;
and a trailing abutting section engageable with the inner shoulder of the recess to cause at least a portion of said leading section to deform radially outwardly, during the insertion of the pipe, to thereby increase the effective area of the primary sealing surface, and also the stress thereof, acting on the pipe as the pipe is inserted into the bore;
said trailing abutting section being in the form of an annular axial projection having an outer diameter substantially equal to the diameter of said recess surface, a narrow radial dimension for its complete axial dimension, and an axial dimension which is longer than its radial dimension, such as to increase said radial deformation, and thereby the effective area of the primary sealing surface, and of the stress acting on the pipe, during the insertion of the pipe into the bore.

15. The seal according to Claim 14, wherein said annular axial projection is joined to the initial sealing surface by a thickened stiffening section effective to stiffen the primary sealing surface and leading section during their deformation radially inwardly as the pipe is inserted into the bore.

16. The seal according to Claim 15, wherein the radial dimension of said annular axial projection is less than one-half the radial dimension of said thickened stiffening section.

17. The seal according to Claim 16, wherein the surface of said thickened stiffening section facing said annular axial projection is substantially flat and perpendicular to the longitudinal axis of said bore.

18. The seal according to Claim 17, wherein said flat surface of the thickened stiffening section is joined to said initial sealing surface by a tapered surface.

19. The seal according to any one of Claims 15-18, wherein said thickened stiffening section has an axial dimension approximately one-half the axial dimension of said annular axial projection.

20. The seal according to any one of Claims 15-19, wherein said leading section has an axial dimension substantially larger than the axial dimension of said annular axial projection, thickened stiffening section and initial sealing surface.

21. The seal according to any one of Claims 15-20, wherein said annular axial projection has a radial dimension which is substantially uniform for its complete axial dimension.

22. The seal according to any one of Claims 14-21, wherein said leading section has tapered inner and outer surfaces.

23. A pipe coupling according to any one of Claims 1-13, substantially as described with reference to and as illustrated in Figs. 4-12 of the accompanying drawings.

24. The annular seal according to any one of Claims 14-22 substantially as described with reference to and as illustrated in any of Figs. 4-12 of the drawings.
